# FASCICULE DE BREVET EUROPEEN

(11) **EP 0 868 772 B1**
(45) Date de publication et mention de la délivrance du brevet: **25.10.2000**
(21) Numéro de dépôt: 96943186.5
(22) Date de dépôt: 23.12.1996
(51) Int. Cl.: H02K 21/24, B60K 7/00

(54) **SYSTEME D'ENTRAINEMENT EN ROTATION D'UN DISPOSITIF**
Rotationsantriebsvorrichtungssystem
SYSTEM FOR ROTATING A DEVICE

(30) Priorité: 21.12.1995 FR 9515303
(43) Date de publication de la demande: 07.10.1998
(73) Titulaire: JEUMONT INDUSTRIE, 92400 Courbevoie (FR)
(72) Inventeur: BRUTSAERT, Patrick, F-59245 Recquinies (FR); CANINI, Jean-Marc, F-59149 Aibes (FR); HUART, Philippe, F-59600 Maubeuge (FR)
(74) Mandataire: Corret, Hélène
(86) Numéro de dépôt international: FR9602070
(87) Numéro de publication internationale: WO9723942

(56) Documents cités:
- EP-A- 0 582 563
- EP-A- 0 609 705
- FR-A- 2 606 951
- FR-A- 2 639 486
- US-A- 3 566 165

## Description

La présente invention concerne un système d'entraînement en rotation d'un dispositif.

Un tel dispositif peut par exemple être constitué par une roue de véhicule, un ventilateur et plus généralement tout dispositif dont la partie rotative présente un avantage à être située en périphérie.

On connaît des systèmes d'entraînement pour les roues de véhicules ferroviaires comprenant un moteur à flux radial, dont le rotor tourne à l'intérieur d'un alésage statorique et qui est fixé à la structure du bogie, à sa partie inférieure. Ce moteur entraîne une roue au moyen d'un réducteur.

L'entraînement s'effectue de façon similaire dans le cas de moteurs électriques, utilisés pour entraîner un véhicule routier. Dans ce cas, le stator est fixé au châssis du véhicule.

Ces dispositifs d'entraînement classiques présentent l'inconvénient d'être encombrants, puisqu'ils nécessitent l'utilisation d'un dispositif de transmission. Celui-ci augmente de surcroît le poids de l'ensemble du véhicule.

Par ailleurs, lorsque le moteur doit être réparé, il est nécessaire de démonter le dispositif de transmission. Ceci entraîne des temps d'intervention relativement longs et conduit à une augmentation des coûts.

Enfin, les moteurs classiques sont prévus pour une puissance déterminée. Ainsi, lorsque la puissance nécessaire est relativement faible, le moteur ne fonctionne pas au rendement nominal.

On retrouve ces problèmes et notamment la présence nécessaire d'un dispositif de transmission, pour de nombreux dispositifs entraînés en rotation par un moteur.

Le document FR-A-2 606951 décrit un moteur du type discoïde qui est utilisé pour l'entraînement d'une roue de véhicule.

Les disques rotor du moteur sont reliés à la jante de la roue laquelle supporte le pneu et les disques stator sont reliés entre eux et à des flasques d'extrémité par l'intermédiaire de tirants. L'ensemble des disques stator est fixé sur l'arbre du moteur par un des flasques d'extrémité.

Le document EP-A-0609 705 décrit une commande électromotrice directe pour une roue individuelle de moteur qui comprend un moteur à induit disposé axialement à côté de la roue à entraîner, l'induit du moteur étant relié directement à la roue, par exemple par des boulons.

L'invention a pour objet de pallier les inconvénients des dispositifs connus en proposant un nouveau système d'entraînement en rotation d'un dispositif, permettant de réduire le poids et l'encombrement du dispositif, de diminuer les coûts d'intervention lors d'une éventuelle réparation ainsi que d'utiliser le moteur à son rendement nominal.

Ainsi, l'invention est relative à un système d'entraînement d'un dispositif, comprenant un moteur électrique du type discoïde avec un stator et un rotor caractérisé, en ce que ledit stator est directement relié à l'arbre fixe du moteur, ledit rotor étant un élément constitutif dudit dispositif qu'il entraîne directement en rotation.

Les caractéristiques suivantes peuvent également être prises en considération, selon toutes leurs combinaisons techniquement possibles :
- le rotor est lié à la carcasse du moteur, qu'il forme au moins en partie,
- la carcasse et le rotor dudit moteur sont montés rotatifs autour dudit stator ,
- ledit moteur comporte au moins un module d'au moins deux disques stator/rotor disposés coaxialement, le ou les disques rotor étant solidaires des autres éléments constitutifs du dispositif,
- le ou les disques rotor sont des éléments constitutifs de la carcasse du moteur,
- le moteur comporte au moins deux modules d'au moins deux disques stator/rotor disposés coaxialement, ledit système comportant un dispositif de sélection de l'alimentation des bobinages statoriques pour adapter la puissance du moteur,
- le système entraîne une roue de véhicule, le ou les disques rotor et la carcasse étant solidaires de la bande de roulement de la roue et l'axe du moteur coïncidant avec l'axe de l'essieu du véhicule,
- le système entraîne un ventilateur, le ou les disques rotor étant solidaires des pales du ventilateur, et l'axe du moteur coïncidant avec l'axe de l'arbre du ventilateur,
- le système est réversible et peut être utilisé en génératrice électrique.

L'invention sera mieux comprise et les buts, avantages et caractéristiques de celle-ci apparaîtront plus clairement à la lecture de la description qui suit, faite au regard des dessins annexés qui représentent des exemples non limitatifs de réalisation de l'invention et sur lesquels :
- la figure 1 représente une vue schématique de dessus et partiellment en coupe d'un système d'entraînement de roue d'un véhicule ferroviaire, selon l'état de l'art,
- la figure 2 est une vue schématique en demi coupe partielle d'un exemple de système d'entraînement selon l'invention, pour une roue de véhicule,
- la figure 3 est une vue schématique en coupe axiale d'un premier mode de réalisation d'un système d'entraînement selon l'invention, destiné à une roue de véhicule ferroviaire,
- La figure 4 est une vue schématique en coupe axiale d'un deuxième mode de réalisation d'un système selon l'invention, destiné à une roue de véhicule ferroviaire et
- la figure 5 est une vue schématique en coupe axiale d'un troisième mode de réalisation d'un système d'entraînement selon l'invention, destiné à un ventilateur.

Les éléments communs aux différentes figures seront désignés par les mêmes références.

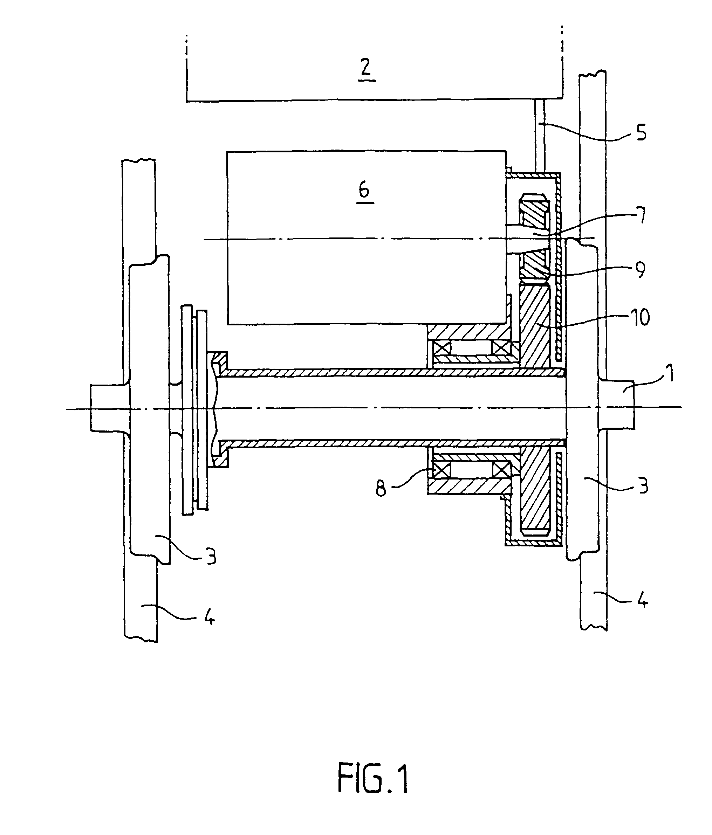

On se réfère tout d'abord à la figure 1 qui représente une vue schématique de dessus et partiellement en coupe d'un système d'entraînement d'une roue de véhicule ferroviaire, selon l'état de la technique.

La référence 1 désigne un essieu qui est fixé à la structure du bogie 2 par des moyens connus et non représentés sur la figure.

L'essieu 1 est libre en rotation par rapport à l'ensemble du bogie. A une extrémité de l'essieu, est fixée une roue 3. Cette dernière est conçue pour coopérer avec un rail 4.

Le moteur d'entraînement 6 est un moteur à flux radial, fixé à la structure du bogie 2 par des moyens connus 5. La référence 8 désigne un roulement pour le support du moteur sur l'essieu.

Le rotor du moteur dont l'axe porte la référence 7 entraîne le train d'engrenage 9, 10. L'engrenage 10 est solidaire de l'essieu 1 pour transmettre le mouvement d'entraînement à la roue 3.

Ainsi, ce système d'entraînement de véhicule ferroviaire nécessite la présence d'un dispositif de transmission mécanique entre le moteur 6 et la roue 3. Ce dispositif de transmission augmente de façon significative le poids de l'ensemble du bogie. Il est par ailleurs relativement encombrant.

Lorsque le moteur doit subir des réparations, il faut démonter le dispositif de transmission. De ce fait, les temps d'intervention sont relativement longs et les coûts correspondants élevés.

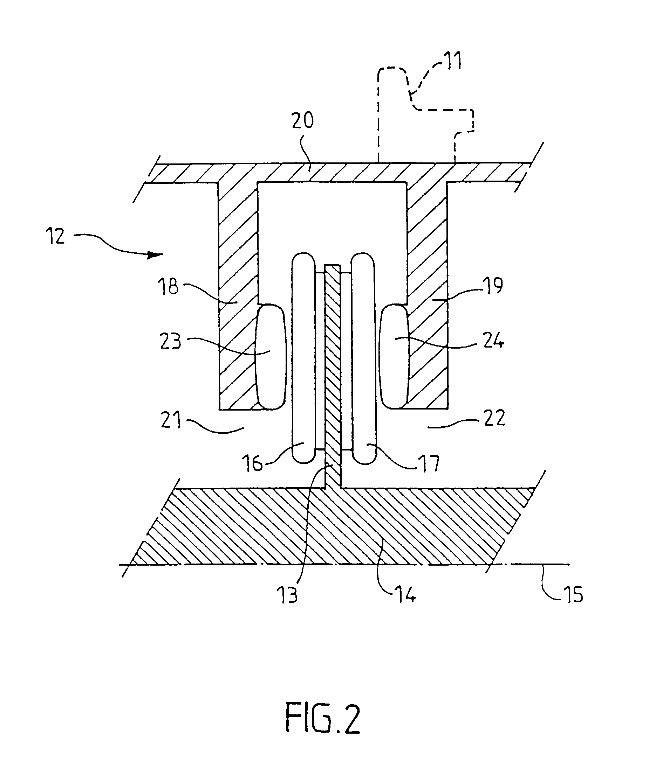

On se réfère maintenant à la figure 2 qui représente de façon schématique une demi-coupe axiale partielle d'un exemple de système d'entraînement selon l'invention pour une roue de véhicule.

Ce système d'entraînement comporte un moteur 12 qui est un moteur électrique à aimants permanents, de structure discoïde.

Il comporte un disque stator 13 qui est centré sur l'axe 15 de l'arbre 14 qui est l'essieu du véhicule. Le disque stator est fixé à l'essieu 14 par des moyens mécaniques connus.

Le disque stator 13 porte, sur chacune de ses faces externes, des bobinages 16, 17 qui forment des pôles magnétiques.

Le rotor du moteur 12 comporte deux disques 18, 19 solidaires de la carcasse 20 du moteur 12. Chacun de ces disques comporte une partie centrale 21, 22 qui est évidée. Les deux disques rotor 18, 19 sont centrés, comme le disque stator 13, sur l'axe 15 de l'essieu 14.

Chaque disque rotor 18, 19 comprend sur sa face en regard avec le disque stator 13, des aimants permanents 23, 24.

La carcasse 20 est fermée à chaque extrémité par des moyens qui ne sont pas représentés sur la figure 2.

Le disque stator 13 est solidaire de l'essieu 14 et il est fixe en rotation. La carcasse 20 du moteur est solidaire des disques rotors 18 et 19 qui tournent autour de l'essieu 14.

La référence 11 désigne la bande de roulement de la roue est destinée à coopérer avec un rail de chemin de fer. Elle est rendue solidaire de la carcasse 20 et donc du rotor par des moyens appropriés qui seront décrits ultérieurement.

Ainsi, le rotor du moteur est monté rotatif autour du stator et constitue une partie de la roue du véhicule. Le moteur entraîne directement la roue en rotation, sans qu'un dispositif de transmission ne soit nécessaire. Le système d'entraînement de la roue est donc exclusivement constitué d'un moteur.

Dans l'exemple représenté à la figure 2, le moteur comporte un module de trois disques rotor/stator. Comme cela sera expliqué dans la suite de la description, le moteur peut comporter plusieurs modules de disques rotor/stator en fonction de la puissance demandée, un dispositif de sélection de l'alimentation des bobinages statoriques étant alors prévu pour obtenir des puissances adaptées à la charge à transporter.

Par ailleurs, dans l'exemple illustré à la figure 2, le système d'entraînement est destiné à une roue de véhicule ferroviaire mais l'invention n'est pas limitée à cette application.

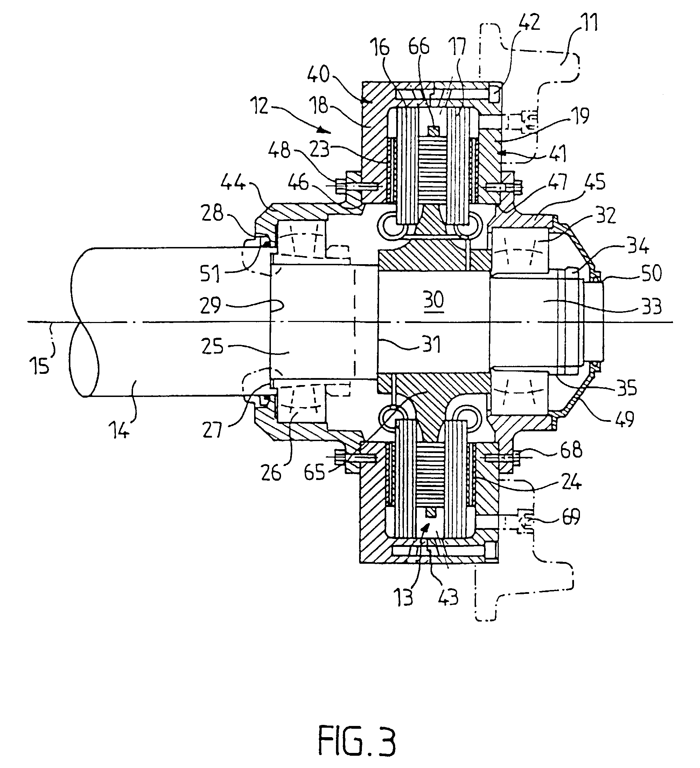

On se réfère à présent à la figure 3 qui est une vue schématique en coupe d'un premier mode de réalisation d'un système d'entraînement selon l'invention, destiné à une roue de véhicule ferroviaire.

L'extrémité de l'essieu 14, partiellement représenté sur la figure, supporte le moteur 12 ainsi que la bande de roulement 11 de la roue.

Comme décrit en référence à la figure 2, le disque stator 13 et l'essieu 14 sont fixes en rotation. A cet effet, le disque stator comporte un corps 65 annulaire qui est bloqué en rotation par rapport à l'essieu 14, par des moyens connus qui ne sont pas représentés sur la figure. Ces moyens peuvent notamment être constitués par des clavettes. Le corps 65 est prolongé dans sa partie centrale et du côté opposé à l'essieu, par une partie 66 en forme de disque perpendiculaire à l'axe 15 de l'essieu qui supporte, sur chacune de ses faces, les bobinages 16, 17.

L'extrémité de l'essieu comporte un premier épaulement cylindrique 25, sur lequel est placé un premier roulement à billes 26 par l'intermédiaire d'une bague 27. L'alésage de la bague 27 est cylindrique et sa surface externe est conique, de façon à pouvoir coopérer avec le roulement à billes 26. Ce dernier est maintenu sur la bague 27 au moyen d'un écrou fileté 28.

L'ensemble constitué par le roulement à billes 26, la bague 27 et l'écrou 28 est placé en butée sur la face 29 du premier épaulement 25.

L'essieu 14 présente un deuxième épaulement 30 dont le diamètre est légèrement inférieur à celui du premier épaulement 25. Ce deuxième épaulement 30 est usiné pour recevoir le stator 13. A une extrémité, le corps 65 du stator prend appui sur la face 31 de l'épaulement 30. A son autre extrémité est prévu un deuxième roulement à billes 32 qui coopère avec un troisième épaulement cylindrique 33 de l'essieu.

Ce troisième épaulement 33 présente un diamètre légèrement inférieur à celui de l'épaulement 30. Le deuxième roulement à billes 32 est bloqué par un écrou 34. Comme pour le roulement à billes 26, une bague 35 permet le maintien latéral du roulement 32.

Le rotor est constitué de plusieurs éléments assemblés entre eux pour former la carcasse 20 du moteur.

Cette carcasse doit être suffisamment solide pour supporter le poids du véhicule entraîné.

La carcasse 20 du moteur 12 est constituée d'au moins deux boîtiers 40, 41 de forme cylindrique. La section de ces boîtiers, dans un plan passant par l'axe 15, est en forme de L.

Les deux boîtiers 40 et 41 sont maintenus solidaires par l'intermédiaire d'une pluralité de vis 42 réparties sur leur pourtour.

Le plan de joint 43 entre les boîtiers 40, 41 est de préférence usiné de façon à permettre leur centrage l'un par rapport à l'autre.

Le plan de joint 43 peut notamment être réalisé par un lamage formé sur l'un des boîtiers et coopérant avec une portée cylindrique usinée sur l'autre boîtier.

Les parois des boîtiers qui sont perpendiculaires à l'axe 15 de l'essieu constituent les disques rotor 18 et 19. Sur la face interne de chacun de ces disques rotor, sont fixés les aimants permanents 23, 24.

La bande de roulement 11 de la roue est maintenue sur le boîtier 41 au moyen d'éléments de fixation 69. Elle est ainsi solidaire des deux disques rotor 18 et 19, lesquels sont des éléments constitutifs de la roue du véhicule.

Des flasques d'extrémité 44, 45 permettent de centrer le moteur 12 sur l'essieu 14, par l'intermédiaire des roulements à billes 26 et 32.

Ainsi, le moteur 12 est monté de façon équilibrée, par rapport à l'essieu 14, grâce aux roulements 26 et 32 placés de part et d'autre du moteur.

Une partie cylindrique 46, 47 est usinée sur chacun des flasques 44, 45. Chacune des parties cylindriques 46, 47 s'emboîte sur un boîtier 40, 41 du rotor, comme illustré sur la figure 3.

Les flasques 44, 45 sont fixés sur les boîtiers 40 et 41 par l'intermédiaire de vis 48, 68, les vis de chaque série étant réparties selon un cercle centré sur l'axe 15 de l'essieu.

Les flasques supportent ainsi l'ensemble du rotor et de la roue. La forme et les dimensions de ces flasques sont adaptées au type de véhicule et d'essieu utilisés.

A l'extrémité de l'essieu 14, est prévu un cache 49 qui permet d'éviter que des corps étrangers ne s'introduisent dans le roulement 32. Un joint 50 peut également être installé sur le cache 49 pour éviter l'introduction de poussières dans le roulement. Dans le même but, un joint 51 est disposé entre le flasque 44 et l'essieu 14.

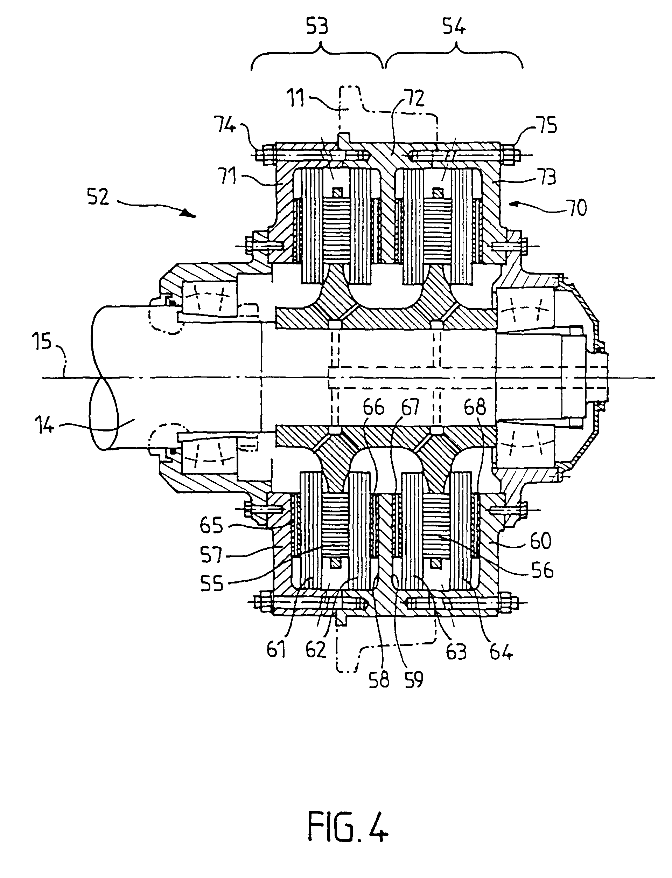

On se réfère maintenant à la figure 4 qui montre un deuxième mode de réalisation d'un système d'entraînement selon l'invention, pour une roue de véhicule.

Ce dispositif diffère de celui illustré à la figure 3 essentiellement en ce qui concerne le moteur et la disposition de la bande de roulement de la roue.

Le moteur 52 illustré à la figure 4 est composé de deux modules rotor/stator identiques, référencés 53 et 54.

Chacun de ces ensembles 53, 54 comporte un disque stator 55, 56 et deux disques rotors 57, 58 et 59, 60 de part et d'autre de chacun des disques stator 55 et 56.

Comme dans le mode de réalisation illustré à la figure 3, les disques stator 55 et 56 sont fixés sur l'essieu 14 et sont bloqués en rotation par rapport à celui-ci, par des moyens similaires à ceux qui ont déjà été décrits.

Par ailleurs, chaque face de disque stator supporte des enroulements 61, 62 et 63, 64.

Chacun des disques rotor 57, 58, 59, 60 comporte, sur sa face en regard des disques stator, des aimants permanents 65, 66, 67, 68.

Dans l'exemple représenté à la figure 4, la carcasse 70 du moteur est constituée en trois parties 71, 72 et 73 qui sont fixées entre elles par des moyens appropriés, tels que les vis 74 et 75. La partie intermédiaire 72 comporte un disque rotor double face qui correspond aux disques rotor 58 et 59. Sur chaque face de ce rotor sont placés les aimants permanents 66, 67 du rotor.

Dans l'exemple illustré à la figure 4, la bande de roulement 11 de la roue est solidaire de l'élément de carcasse 72. Cependant, elle pourrait être fixée de façon différente, comme cela a, par exemple, été illustré sur la figure 3.

Comme dans les exemples illustrés aux figures 2 et 3, les disques rotor sont des éléments constitutifs de la roue du véhicule.

Par ailleurs, dans le système d'entraînement illustré à la figure 4, le moteur 52 est conçu de façon modulaire. Cette conception permet de faire fonctionner le moteur dans tous les cas à sa puissance nominale, quelle que soit la puissance demandée.

Ceci est obtenu en sélectionnant l'alimentation sur un ou plusieurs bobinages statoriques afin que les puissances soient adaptées aux charges à transporter.

Par ailleurs, cette conception permet de réparer la partie du moteur qui est défectueuse, sans avoir à changer l'ensemble du moteur.

Enfin, cette conception modulaire permet, par assemblage de modules élémentaires rotor/stator présentant des dimensions de diamètres identiques, de réaliser des moteurs de puissances différentes.

Dans les exemples illustrés aux figures 3 et 4, le stator et les roulements sont directement fixés sur l'essieu 14. On peut très bien prévoir que le stator et les roulements à billes sont fixés sur une manchette cylindrique qui sera elle-même positionnée sur l'essieu. Le montage sera réalisé de façon à ce que la manchette et le stator soient fixes en rotation par rapport à l'essieu. Ceci permet l'assemblage du moteur en atelier et facilite le montage et/ou le démontage de celui-ci sur l'essieu.

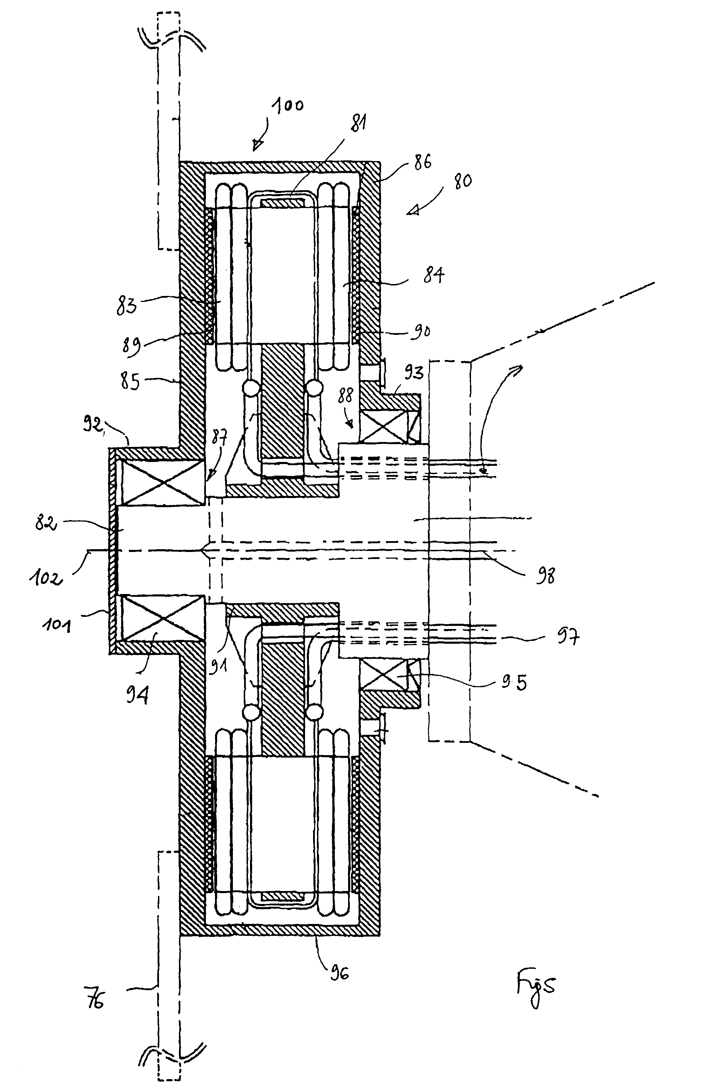

En référence à la figure 5, va être décrit un système d'entraînement selon l'invention pour un ventilateur.

Le système d'entraînement comporte un moteur 80, les pales 76 du ventilateur étant directement montées sur le moteur.

Le moteur 80 est un moteur électrique de structure discoïde.

Il comporte un disque stator 81 dont le corps central annulaire 91 est fixé sur un arbre 82 et centré sur l'axe 102 de l'arbre 82. L'arbre 82 est fixe en rotation.

Sur chacune de ses faces, le disque stator 81 porte des bobinages 83, 84.

Le moteur 80 comporte également deux disques rotor 85, 86 solidaires de la carcasse 100 du moteur. Chaque disque rotor 85, 86 comporte une partie centrale évidée 87, 88 et des aimants permanents 89, 90 sur sa face en regard avec le disque stator 81.

Les disques rotor sont centrés, comme le disque stator 81, sur l'axe 102 de l'arbre 82.

Dans cet exemple de réalisation, les pales 76 du ventilateur sont directement montées sur le disque rotor 85. D'autres montages pourraient être prévus, dans la mesure où ces pales sont directement fixées sur le rotor du moteur 80.

Chaque disque rotor comporte un flasque 92, 93 permettant de le centrer sur l'arbre 82, par l'intermédiaire d'un roulement à billes 94, 95.

A l'extrémité de l'arbre 82, est prévu un cache 101 qui permet d'éviter l'introduction de corps étrangers dans le roulement 94.

La carcasse 100 du moteur 80 est constituée par les disques rotor 85, 86 et une partie cylindrique 96 entre les deux disques.

La référence 97 désigne l'alimentation électrique des bobinages statoriques 83, 84.

La référence 98 désigne les conduits de ventilation du moteur 80.

Comme dans les exemples illustrés aux figures 2 à 4, le rotor du moteur est monté rotatif autour du stator et il est un élément constitutif du dispositif entraîné en rotation.

Ainsi, les pales 76 du ventilateur sont directement entraînées en rotation par les disques rotor, sans aucun système de transmission intermédiaire ne soit nécessaire.

Dans tous les modes de réalisation illustrés, le système d'entraînement selon l'invention est beaucoup plus compact que les dispositifs connus dans l'état de la technique, puisque le rotor du moteur est un élément constitutif du dispositif qui est entraîné en rotation et dont le rotor est solidaire. Ceci permet d'entraîner directement le dispositif. Par rapport à un ensemble dispositif/système de transmission/moteur, le poids de l'ensemble est sensiblement diminué.

On voit également que la conception de ce type de moteur permet un démontage facile des différents éléments pour la maintenance de celui-ci.

Les figures 3 et 4 montrent un exemple de montage de la bande de roulement de la roue sur un des éléments constituant le rotor du moteur, cet élément étant également un composant de la roue. Dans ces deux exemples, on a représenté une bande de roulement de roue, destinée à coopérer avec un rail.

Le dispositif d'entraînement selon l'invention n'est cependant pas limité à une application pour les véhicules ferroviaires. On peut également utiliser une roue équipée d'un pneumatique pour véhicules routiers ou tout terrain. Le moteur peut également entraîner un véhicule à chenilles.

Par ailleurs, la bande de roulement de la roue peut être fixée sur le rotor du moteur, selon des dispositions différentes qui pourront être jugées appropriées par l'homme du métier.

De même, le système d'entraînement selon l'invention peut être appliqué à un ventilateur, comme illustré à la figure 5, mais également à tout dispositif entraîné en rotation.

Comme indiqué précédemment, le moteur du système d'entraînement peut être conçu de façon modulaire. On peut notamment se référer à cet égard à la demande de brevet français FR-A-2 742 939.

Dans les applications qui ont été décrites, le système est moteur. Cependant, ce système est réversible et peut être utilisé systématiquement ou occasionnellement en génératrice électrique.

Les signes de référence insérés après les caractéristiques techniques figurant dans les revendications ont pour seul but de faciliter la compréhension de ces dernières et ne sauraient en limiter la portée.

## Revendications

1. Système d'entraînement en rotation d'un dispositif, comprenant un moteur électrique (12, 52, 80) du type discoïde avec un stator et un rotor, caractérisé en ce que ledit stator est directement relié à l'arbre fixe (14, 82) du moteur, ledit rotor étant un élément constitutif dudit dispositif qu'il entraîne directement en rotation.

2. Système d'entraînement selon la revendication 1, caractérisé en ce que le rotor est lié à la carcasse (20, 70, 100) du moteur (12, 52, 80), qu'il forme au moins en partie.

3. Système d'entraînement selon la revendication 2, caractérisé en ce que la carcasse (20, 70, 10) et le rotor dudit moteur sont montés rotatifs autour dudit stator.

4. Système d'entraînement selon l'une des revendications 1 à 3, ledit moteur (12, 52, 80) comportant au moins un module d'au moins deux disques stator/rotor (13, 55, 56, 81; 18, 19, 57, 58, 59, 60, 85, 86) disposés coaxialement, le ou les disques rotor étant solidaires des autres éléments constitutifs du dispositif.

5. Système d'entraînement selon la revendication 4, dont le ou les disques rotor (18, 19, 57, 58, 59, 60, 85, 86) sont des éléments constitutifs de la carcasse (20, 70, 100) du moteur.

6. Système d'entraînement selon l'une des revendications 4 ou 5, dont le moteur (52) comporte au moins deux modules (53, 54) d'au moins deux disques stator/rotor (55, 57, 58; 56, 59, 60) disposés coaxialement, ledit système comportant un dispositif de sélection de l'alimentation des bobinages statoriques (61, 62, 63, 64) pour adapter la puissance du moteur (52).

7. Système d'entraînement selon l'une des revendications 1 à 6, pour une roue de véhicule, le ou les disques rotor (18, 19, 57, 58, 59, 60) et la carcasse étant solidaires de la bande de roulement (11) de la roue et l'axe du moteur (12, 52) coïncidant avec l'axe (15) de l'essieu (14) du véhicule.

8. Système d'entraînement selon l'une des revendications 1 à 6, pour un ventilateur, le ou les disques rotor (85, 86) étant solidaires des pales (76) du ventilateur, et l'axe du moteur (80) coïncidant avec l'axe (83) de l'arbre (82) du ventilateur.

9. Système d'entraînement selon l'une des revendications 1 à 8, réversible et pouvant être utilisé en génératrice électrique.

## Patentansprüche

1. Rotationsantriebssystem einer Vorrichtung, umfassend einen Elektromotor (12, 52, 80) der scheibenähnlichen Art mit einem Stator und einem Rotor, dadurch gekennzeichnet, daß besagter Stator direkt mit der festen Welle (14, 82) des Motors verbunden ist, wobei besagter Rotor ein besagte Vorrichtung bildendes Element ist, das er direkt in Rotation antreibt.

2. Antriebssystem gemäß Anspruch 1, dadurch gekennzeichnet, daß der Rotor mit dem Gehäuse (20, 70, 100) des Motors (12, 52, 80) verbunden ist, das er wenigstens teilweise bildet.

3. Antriebssystem gemäß Anspruch 2, dadurch gekennzeichnet, daß das Gehäuse (20, 70, 10) und der Rotor besagten Motors rotierend um besagten Stator angebracht sind.

4. Antriebssystem gemäß Anspruch 1 bis 3, wobei besagter Motor (12, 52, 80) wenigstens ein Modul mit wenigstens zwei koaxial angeordneten Stator- / Rotorscheiben (13, 55, 56, 81; 18, 19, 57, 58, 59, 60, 85, 86) umfaßt, wobei die Rotorscheibe oder Rotorscheiben mit den anderen die Vorrichtung bildenden Elementen fest verbunden ist oder sind.

5. Antriebssystem gemäß Anspruch 4, bei dem die Rotorscheibe oder Rotorscheiben (18, 19, 57, 58, 59, 60, 85, 86) das Gehäuse (20, 70, 100) des Motors bildende Elemente ist oder sind.

6. Antriebssystem gemäß Anspruch 4 oder 5, bei dem der Motor (52) wenigstens zwei Module (53, 54) von wenigstens zwei koaxial angeordneten Stator- / Rotorscheiben (55, 57, 58; 56, 59, 60) umfaßt, wobei besagtes System eine Vorrichtung zur Auswahl der Versorgung der statorischen Wicklungen (61, 62, 63, 64) zur Anpassung der Leistung des Motors (52) umfaßt.

7. Antriebssystem gemäß Anspruch 1 bis 6 für das Rad eines Fahrzeugs, wobei die Rotorscheibe oder Rotorscheiben (18, 19, 57, 58, 59, 60) und das Gehäuse mit der Lauffläche (11) des Rades fest verbunden sind und die Achse des Motors (12, 52) mit der Achse (15) der Fahrzeugachse (14) zusammenfallen.

8. Antriebssystem gemäß Anspruch 1 bis 6, für einen Ventilator, wobei die Rotorscheibe oder Rotorscheiben (85, 86) mit den Gebläseflügeln (76) fest verbunden ist oder sind und die Achse des Motors (80) mit der Achse (83) der Welle (82) des Ventilators zusammenfällt.

9. Antriebssystem gemäß Anspruch 1 bis 8, das reversibel ist und als Stromgenerator verwendet werden kann.

## Claims

1. System for rotating a device, comprising an electric motor (12, 52, 80) of the discoidal type with a stator and a rotor, characterized in that said stator is directly connected to the stationary shaft (14, 82) of the motor, said rotor being a constitutive element of said device which it drives directly in rotation.

2. System for rotating according to claim 1, characterized in that the rotor is connected to the yoke (20, 70, 100) of the motor (12, 52, 80) that it forms at least partially.

3. System for rotating according to claim 2, characterized in that the yoke (20, 70, 10) and the rotor of said motor are rotatively mounted around said stator.

4. System for rotating according to one of claims 1 to 3, said motor (12, 52, 80) comprising at least one module of at least two coaxially arranged stator/rotor discs (13, 55, 56, 81 ; 18, 19, 57, 58, 59, 60, 85, 86), the rotor disc(s) being integral with other constitutive elements of the device.

5. System for rotating according to claim 4, in which the rotor disc(s) (18, 19, 57, 58, 59, 60, 85, 86) is(are) constitutive element(s) of the yoke (20, 70, 100) of the motor.

6. System for rotating according to one of claims 4 or five, in which the motor (52) comprises at least two modules (53, 54) of at least two coaxially arranged stator/rotor discs (55, 57, 58 ; 56, 59, 60), said system comprising a device for selecting supply of the stator coils (61, 62, 63, 64) in order to adapt the power of the motor (52).

7. System for rotating according to one of claims 1 to 6, for a vehicular wheel, the rotor disc(s) (18, 19, 57, 58, 59, 60) and the yoke being integral with the tire tread (11) of the wheel and the axis of the motor (12, 52) congruent with the axis (15) of the vehicle axle (14).

8. System for rotating according to one of claims 1 to 6, for a fan, the rotor disc(s) (85, 86) being integral with the blades (76) of the fan, and the axis of the motor (80) being congruent with the axis (83) of the fan shaft (82).

9. System for rotating according to one of claims 1 to 8, which is reversible and adapted to be used in an electric generator.
